# EUROPÄISCHE PATENTANMELDUNG

(11) **EP 2 058 973 A2**
(43) Veröffentlichungstag der Anmeldung: **13.05.2009**
(21) Anmeldenummer: 08450173.3
(22) Anmeldetag: 05.11.2008
(51) Int. Cl.: H04L 9/08

(54) **QKD-Einrichtung**

(30) Priorität: 07.11.2007 AT 17952007
(71) Anmelder: Austrian Research Centers Gmbh - Arc, 1220 Vienna (AT)
(72) Erfinder: Bettelli, Stefano, 1200 Wien (AT); Peev, Momtchil, 1200 Wien (AT)
(74) Vertreter: Sonn & Partner Patentanwälte

(57) **Zusammenfassung**

QKD-Einrichtung (21) mit einer Photonenquelle (2) zur Erzeugung von verschränkten Idler- und Signal-Photonen, mit zwei Messeinheiten (8, 9), von denen die eine die Idler-Photonen und die andere die Signal-Photonen zugeführt erhält, und die je ein optisches Modul (10) mit mehreren Photonenkanälen (12, 13, 14, 15), wobei ein Photon Polarisations-abhängig einen Photonenkanal passiert, und eine Detektoreinrichtung (11) zum Detektieren der Photonen in Zuordnung zum jeweiligen Photonenkanal aufweist, sowie mit Zeitsteuermitteln (20) zur zeitlichen Abstimmung der Detektoreinrichtungen (11), wobei die Photonenquelle (2) zur pulsweisen Abgabe der Photonenpaare eingerichtet und der anderen Messeinheit (9) eine Unterbrechereinheit (28) zur pulsweisen Zuführung der Signal-Photonen zum optischen Modul (10) vorgeordnet ist, in jedem optischen Modul (10) die Photonenkanäle (12, 13, 14, 15) Verzögerungseinheiten (24, 25, 26, 27) mit verschiedenen Verzögerungszeiten aufweisen, und ein einziger Einzelphotonendetektor (22, 23) die Photonen auf Zeitraster-Basis den Photonenkanälen (12, 13, 14, 15) zuordnet.

## Beschreibung

Die Erfindung betrifft eine QKD-Einrichtung mit einer Photonenquelle, die zur Erzeugung von Paaren von verschränkten Photonen, nämlich Idler-Photonen und Signal-Photonen, eingerichtet ist, und mit zwei Messeinheiten, von denen die eine jeweils die Idler-Photonen und die andere jeweils die Signal-Photonen der Photonenpaare zugeführt erhält, und von denen jede ein optisches Modul mit mehreren Photonenkanälen, wobei ein Photon abhängig von seiner Polarisation nur einen dieser Photonenkanäle passiert, und eine Detektoreinrichtung zum Detektieren eines solchen Photons in Zuordnung zum jeweiligen Photonenkanal aufweist, sowie mit Zeitsteuermitteln zur zeitlichen Abstimmung der Detektoreinrichtungen der beiden Messeinheiten im Hinblick auf die korrelierte Detektion der Photonen eines jeden Paars.

Festzuhalten ist hierbei, dass Photonen keine definierte Polarisation besitzen, außer ihr Zustand ist ein Eigenzustand des Polarisationsmessgeräts, und der Wert der Polarisation erst durch die Messung bestimmt wird. Die Angabe "abhängig von seiner Polarisation" soll im vorliegenden Text in diesem Sinne verstanden werden.

Mit "QKD" - "Quantum Key Distribution" (Quantenschlüsselverteilung; manchmal auch - nicht ganz richtig - als Quantenkryptographie bezeichnet) wird allgemein ein Kommunikationsprotokoll zwischen zwei Teilnehmern bezeichnet, das die Bildung eines geheimen gemeinsamen Schlüssels unter Verwendung eines klassischen authentischen öffentlichen Kanals und eines Quantenkanals erlaubt. In der (Quanten)Kryptographie werden die beiden legitimierten Teilnehmer üblicherweise als "ALICE" und "BOB" bezeichnet, wogegen ein möglicher Lauscher als "EVE" (von "Eavesdropper" - Lauscher) angegeben wird.

Im Einzelnen wird mit "Quantenkryptographie" die Technik der Erzeugung und Verteilung symmetrischer Geheimnisse bezeichnet, wobei die Geheimnisse, nämlich an zwei voneinander entfernten Orten ausgegebene identische Bitfolgen, mit Methoden der Quanteninformationstheorie mathematisch exakt nachgewiesen werden kann (informationstheoretische Sicherheit). Die erzeugten und verteilten symmetrischen Geheimnisse können in weiterer Folge z.B. als Schlüssel für symmetrische kryptographische Chiffrierverfahren verwendet werden. Im Gegensatz dazu gibt es für herkömmliche, auf asymmetrischer Kryptographie basierende Schlüsselverteilungs-Systeme keinen derartigen Sicherheitsbeweis.

Die Quantenkryptographie wurde interdisziplinär zwischen den wissenschaftlichen Gebieten Quantenphysik, Quantenoptik, Informationstheorie, Kryptographie und Informatik entwickelt. Ein Überblick über die Grundlagen und Verfahren sowie die historische Entwicklung der Quantenkryptographie ist in den Artikeln N. Gisin, G. Ribordy, W. Tittel, and H. Zbinden, "Quantum Cryptography", Rev. Mod. Phys. 74, 145 (2002); und M. Du 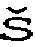 ek, N. Lütkenhaus, M. Hendrych, "Quantum Cryptography", Kapitel 5, Progress in Optics, vol. 49, Edt. E. Wolf (Elsevier, 2006), enthalten.

Eine übliche quantenkryptographische Verbindung enthält zwei Stationen bzw. Apparaturen, die üblicherweise als ALICE-Komponente und BOB-Komponente bezeichnet werden. Diese an zwei voneinander entfernten Orten aufgestellten Stationen sind durch einen optischen Quantenkanal (Glasfaser-gebunden oder durch den freien Raum) sowie durch einen herkömmlichen, klassischen Kommunikationskanal, auch öffentlicher Kanal genannt, verbunden.

Eine derartige quantenkryptographische Verbindung erzeugt in ihren ALICE- und BOB-Komponenten symmetrische (d.h.: in den ALICE- und BOB-Komponenten identische) Geheimnisse, die zur weiteren Verwendung, z.B. als Schlüssel in angeschlossenen kryptographischen Systemen, über Datenkanäle nach außen geliefert werden.

Im Folgenden wird nur QKD betrachtet, die auf verschränkten Photonen basiert. Hierbei werden zwei verschränkte Photonen, die korrelierte Eigenschaften aufweisen, zu den zwei Partnern gesendet. Die beiden Partner messen diese Eigenschaften, wie z.B. die Polarisation, erhalten die selben Messergebnisse und können daher einen identen Schlüssel aufbauen. Dabei werden Teile der Messergebnisse, wie z.B. die exakten Zeitpunkte, über öffentliche Kanäle ausgetauscht. Alle Nachrichten, die über die öffentlichen Kanäle ausgetauscht werden, müssen authentifiziert werden. Auf diese Weise können die beiden Partner die einzelnen Messungen einander exakt zuordnen.

Bei der Methode der verschränkten Photonen werden in einer Photonenquelle durch eine spezielle Technik zwei Photonen, die quantenmechanisch korreliert sind, gleichzeitig erzeugt. Je ein Photon, nämlich einerseits das Idler-Photon und andererseits das Signal-Photon, wird zu einem der beiden Partner gesendet, so dass die beiden Partner gleichzeitig (sieht man von Leitungsverzögerungen ab) im Prinzip ein identes Messergebnis erhalten. Durch anschließende authentifizierte Kommunikation wird über den öffentlichen Kanal bei beiden Partnern der gleiche Schlüssel aufgebaut.

In der Vergangenheit wurden verschiedene QKD-Protokolle im Hinblick auf unterschiedliche Photonenquellen vorgeschlagen. Eines der bekanntesten und gängigsten Protokolle ist das sog. "BB84-Protokoll" (BB84 - Bennet-Brassard 1984); bei entsprechenden Einrichtungen kann mit diesem BB84-Protokoll sichergestellt werden, dass eine sichere Quantenschlüssel-Verteilung erfolgt, oder aber dass ein eventueller Lauscher sicher detektiert wird.

Beim BB84-Protokoll werden in der hier interessierenden bevorzugten Version, bei der verschränkte Photonen verwendet werden, von der Photonenquelle jeweils paarweise Photonen mit entsprechender, verschränkter Polarisation erzeugt. Die Photonenquelle weist beispielsweise einen Pumplaser und einen nicht-linearen Kristall zur spontanen parametrischen Abwärtskonversion (SPDC - Spontaneous Parametric Down-Conversion) auf, wobei die Photonenpaare ein lokales Photon, das Idler- oder Trigger-Photon, das zum Triggern der Übertragung eines Signals verwendet wird, und das Signal-Photon oder "Fern"-Photon , das zur Informationsübertragung auf dem Quantenkanal zum fernen Teilnehmer verwendet wird, enthalten.

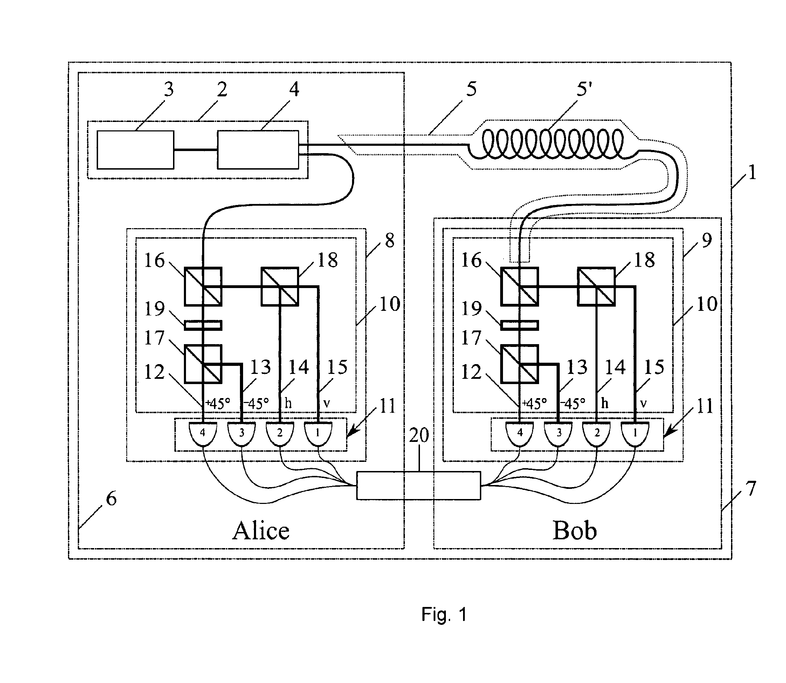

In Fig. 1 ist das Prinzip einer bekannten QKD-Einrichtung 1 veranschaulicht (vgl. auch Poppe et al. "Practical Quantum Key Distribution with Polarization-Entangled Photons", Opt.Express, 12:3865-3871). Diese bekannte QKD-Einrichtung 1 weist eine Photonenquelle 2 mit einem Pumplaser 3 und einem SPDC-Kristall 4 auf, um polarisationsverschränkte Photonen, nämlich konkret Signal-Photonen, für die Übertragung auf einem Quantenkanal 5 zu einem Teilnehmer "BOB", sowie Idler-Photonen, für den lokalen Teilnehmer "ALICE", zu erzeugen. Die beiden Teilnehmer ALICE und BOB sind in Fig. 1 mit 6 bzw. 7 bezeichnet. Die Photonenquelle 2 erzeugt beispielsweise Photonenpaare mit einer Rate von 1 MHz, mit einem Verschränkungs-Kontrast von >96 %.

Zur Messung der jeweiligen Photonen ist bei jedem Teilnehmer 6 bzw. 7 eine Messeinheit 8 bzw. 9 vorgesehen, die jeweils ein optisches Modul 10 sowie als Detektoreinrichtung 11 eine Anzahl von Einzelphotonendetektoren in Form von Photodioden, beispielsweise Lawinenphotodioden, aufweisen. In den ähnlich ausgebildeten optischen Modulen 10 sind jeweils vier Photonenkanäle 12, 13, 14, 15 vorgesehen, die jeweils einen Ausgang des optischen Moduls 10 definieren, an den ein zugehöriger Einzelphotonendetektor angeschlossen ist. Die vier Photonenkanäle 12, 13, 14, 15 werden dadurch erhalten, dass einem nicht-polarisierenden Strahlteiler 16 an dessen beiden Lichtausgängen polarisierende Strahlteiler 17, 18 nachgeschaltet werden, wobei vor einem dieser polarisierenden Strahlteiler, beispielsweise dem Strahlteiler 17, noch ein Halbwellenplättchen (λ/2-Plättchen) 19 angeordnet ist. Die einzelnen Photonenkanäle 12 bis 15 schließen dann an die polarisierenden Strahlteiler 17, 18 jeweils im Durchgangspfad bzw. Reflexionspfad an. Demgemäß können die Photonenkanäle 12 bis 15 jeweils nur Photonen mit horizontaler bzw. vertikaler Polarisation passieren, wobei durch das λ/2-Plättchen zusätzlich erreicht wird, dass die Photonen, die im Photonenkanal 12 oder 13 passieren, eine +45°-Polarisationsebene und eine -45°-Polarisationsebene aufweisen.

Wenn nun ein Idler-Photon auf der lokalen Teilnehmerseite 6 "ALICE" dem optischen Modul 10 zugeführt wird, so gelangt es über einen der vier Photonenkanäle 12 bis 15 zu einem der vier Einzelphotonendetektoren, die "nummeriert" zu denken sind (s. die Nummern "1" bis "4"), und je nach Nummer des ansprechenden Einzelphotonendetektors der Detektionseinrichtung 11 wird ein Messergebnis, ein Bit, erhalten, das für das BB84-Protokoll verwendet werden kann.

Ein entsprechender Ablauf, bei der entsprechenden Ausbildung der Messeinheit 9 mit dem optischen Modul 10 und den Einzelphotonendetektoren der Detektoreinrichtung 11, ist auf der fernen Teilnehmerseite 7 "BOB" gegeben, wenngleich dort im Hinblick auf die Übertragung über den Quantenkanal 5 (wobei in Fig. 1 auch eine Lichtleiterfaser 5' schematisch veranschaulicht ist) eine Verzögerung des jeweiligen Signal-Photons eines Paars in Relation zum Idler-Photon auf der ALICE-Seite 6 gegeben ist. Demgemäß ist als Zeitsteuermittel 20 unter anderem eine Triggerelektronik vorgesehen, um an den fernen Teilnehmer 7 Triggerimpulse zu senden, sobald ein Photon beim lokalen Teilnehmer 6 detektiert wird. Diese Triggersignale werden über eine unabhängige Leitung übertragen.

Ein Nachteil dieser bekannten QKD-Einrichtung ist, dass jeweils mehrere, nämlich insbesondere vier, Einzelphotonendetektoren zu verwenden sind, die praktisch nie völlig ident sein können, so dass sie auch nicht verlässlich gleichartige Ergebnisse liefern, was Sicherheitsrisiken mit sich bringt. Weiters ist nachteilig, dass die Einzelphotonendetektoren, die an sich relativ kostspielig sind, in einer verhältnismäßig großen Anzahl vorhanden sein müssen (2x4 Einzelphotonendetektoren im gezeigten Beispiel). Auch müssen im Betrieb alle Einzelphotonendetektoren eines Teilnehmers nach einer Detektion immer abgeschaltet werden, etwa für Zeiten von mindestens 50-60 ns, was ebenfalls eine Beeinträchtigung im Betrieb mit sich bringt. Zusätzlich ist auch mit der Triggerelektronik im Zeitsteuermittel 20 ein relativ hoher Aufwand verbunden.

In einer anderen bekannten Einrichtung (vgl. Bettelli et al., "Effect of double pair emission to entanglement based QKD", CLEO-Europe '07 IQEC, 21 Jun 2007) wird als Pumplaser ein 532 nm-CW-Laser in Verbindung mit einem nicht-linearen SPDC-Kristall verwendet, um nicht-entartete Paare von Photonen zu erhalten. Typisch erreichbare Werte für die Photonenrate liegen hier bei 2 MHz, bei einer Pumpleistung von 16 mW. Die Idler-Photonen und Signal-Photonen haben eine mittlere Wellenlänge von 810 nm bzw. 1550 nm. In diesem Fall können beim einem lokalen Teilnehmer (ALICE) ähnlich wie bei der ursprünglichen Version Silizium-Photodioden als Einzelphotonendetektoren verwendet werden, es ist jedoch auf Seiten des fernen Teilnehmers (BOB) nun notwendig, InGaAs-Detektoren für die Detektoreinrichtung zu verwenden, und zwar wegen des unterschiedlichen Frequenzbereichs. Diese InGaAs-Detektoren bringen eine zusätzliche Verteuerung mit sich.

Es ist nun Aufgabe der Erfindung, eine QKD-Einrichtung der eingangs angeführten Art vorzuschlagen, die den vorgenannten Nachteilen so gut wie möglich abhilft und eine Vereinfachung in der Ausbildung der Einrichtung, in Verbindung mit einer verbesserten Funktion, ermöglicht. Insbesondere soll eine Kostenreduktion erzielbar sein, und zwar speziell auch dann, wenn die zuletzt genannte Photonenquelle, bei der paarweise Photonen mit unterschiedlichen Wellenlängen erzeugt werden, eingesetzt wird.

Zur Lösung dieser Aufgabe sieht die Erfindung eine QKD-Einrichtung wie im Anspruch 1 definiert vor. Vorteilhafte Ausführungsformen und Weiterbildungen sind in den abhängigen Ansprüchen angegeben.

Bei der vorliegenden QKD-Einrichtung wird somit, vereinfacht gesprochen, die Mehrfachanordnung von Einzelphotonendetektoren (SPD - Single Photon Detectors) durch ein "Zeitmultiplex"-System ersetzt, wobei die Verzögerungseinheiten, die bevorzugt durch einfache Verzögerungsleitungen (z.B. Glasfasern) mit unterschiedlichen Längen gebildet sind, das Signal so umformen, dass es den Einzelphotonendetektor der jeweiligen Detektoreinrichtung nur innerhalb von bestimmten "Zeitschlitzen" erreichen kann. Anstatt dass daher der Ausgang eines von mehreren Detektorelementen das jeweilige Messsignal definiert, wird somit bei der vorliegenden Schaltung durch den jeweiligen Zeitschlitz das Messsignal festgelegt. Durch den Pulsbetrieb der Photonenquelle, insbesondere durch Einbindung einer Unterbrechereinheit, ebenso wie durch die Anbringung einer Unterbrechereinheit auf der die Signal-Photonen detektierenden fernen Teilnehmerseite werden entsprechend große Zeitfenster definiert, wobei innerhalb dieser Zeitfenster die den Photonenkanälen zugeordneten Zeitschlitze, beispielsweise vier Zeitschlitze, samt dazwischen befindlichen Ruhezeiten unterzubringen sind. Von Vorteil ist dabei, dass nunmehr auf jeder Teilnehmerseite bloß ein einziger Einzelphotonendetektor, z.B. eine einzige Photodiode, angeordnet werden kann, was im Hinblick auch auf die zusätzliche Beschaltung der Einzelphotonendetektoren sowie deren Betriebsweisen mit Ruhezeiten, deren Rauschen etc. einen wesentlichen Vorteil bedeutet; demgegenüber fällt die zusätzliche Verwendung der Unterbrechereinheiten ebenso wie der Verzögerungseinheiten - bei denen es sich durchwegs um vergleichsweise einfache, problemlose Komponenten handelt - nicht ins Gewicht.

Für die Messung der jeweiligen Photonen ist es auch bei der vorliegenden Einrichtung günstig, wenn jedes optische Modul mit zwei polarisierenden Strahlteilern ausgestattet ist, die in den zwei Strahlengängen nach einem nicht-polarisierenden Strahlteiler, einmal unter Zwischenschaltung eines λ/2-Plättchens als Polarisationsdreher und einmal direkt, angeordnet sind, und die mit ihren zwei mal zwei Ausgängen vier Photonenkanäle definieren. Dabei beinhaltet beispielsweise jedes optische Modul in jedem Photonenkanal eine an einen entsprechenden Strahlteiler-Ausgang angeschlossene Verzögerungseinheit, es ist aber auch möglich, in einem Photonenkanal keine Verzögerungseinheit vorzusehen und in den anderen drei Photonenkanälen Verzögerungseinheiten anzuordnen. Die Verzögerungseinheiten pro optischem Modul haben jeweils ansteigende Verzögerungszeiten, was z.B. mit verschieden langen Verzögerungs-Lichtleitungen realisiert werden kann.

Je nach den Umständen können die am jeweiligen Photonenkanal-Ausgang auftretenden Photonen entweder direkt dem jeweiligen Einzelphotonendetektor oder aber über eine optische Kopplereinheit zugeführt werden, wobei beispielsweise eine einzelne 4/1-Kopplereinheit oder aber auch eine Kopplereinheit mit drei 2/1-Kopplern in Kaskade vorgesehen werden kann.

Zur Zeitsteuerung genügt bei der vorliegenden Einrichtung eine einfache Synchronisationseinheit, die gegebenenfalls mit einem PLL-Kreis (phasenverriegelte Schleife) ausgeführt ist; auf den beiden Teilnehmerseiten werden dann zweckmäßig Taktsignal-Einheiten vorgesehen, um die jeweiligen Komponenten, nämlich einerseits die Photonenquelle bzw. die darin vorgesehene optische Unterbrechereinheit, den Einzelphotonendetektor und eine zugehörige Auswerteinheit bzw. andererseits die Unterbrechereinheit sowie den Einzelphotonendetektor und eine zugehörige Auswerteinheit, zeitlich entsprechend anzusteuern. Diese Taktsignal-Einheiten sind mit der gemeinsamen Synchronisationseinheit verbunden, die dafür sorgt, dass die jeweiligen Taktsignale in ihrer Frequenz einander entsprechen (was nicht bedeuten soll, dass die Frequenzen identisch sind, da auch fixe Zuordnungen der Taktsignal-Frequenzen, etwa im Verhältnis 2:1 usw., denkbar sind); anfänglich bzw. zu periodischen Zeitpunkten werden die Taktsignale der beiden Taktsignalgeber zeitlich aufeinander abgestimmt, wobei die Verzögerung der über den Quantenkanal übertragenen Signalphotonen, in Relation zu den Idler-Photonen auf der lokalen Teilnehmerseite, berücksichtigt wird. Eine derartige Synchronisationseinheit ist ebenfalls im Vergleich zur bei der bekannten Einrichtung notwendigen Triggerelektronik relativ einfach auszuführen.

Die Erfindung wird nachfolgend anhand von bevorzugten Ausführungsbeispielen, auf die sie jedoch nicht beschränkt sein soll, und unter Bezugnahme auf die Zeichnung noch weiter erläutert. In der Zeichnung zeigen im Einzelnen:
Fig. 1 ein Schaltbild einer herkömmlichen QKD-Einrichtung, die bereits einleitend erläutert wurde;
Fig. 2 ein entsprechendes Schaltbild einer erfindungsgemäßen QKD-Einrichtung;
Fig. 3 in einem Detail-Schaltbild eine Ausführungsvariante bezüglich der Kopplereinheit, um die Photonenkanäle mit einer Einzel-Photodiode zu koppeln; und
Fig. 4 ein Zeitdiagramm zur Veranschaulichung der Arbeitsweise der erfindungsgemäßen QKD-Einrichtung.

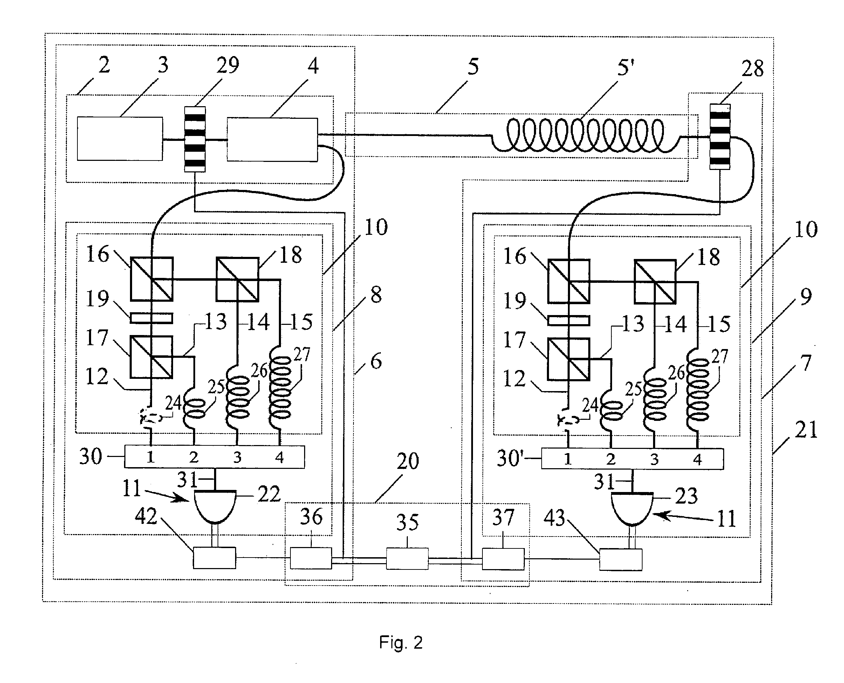

Die in Fig. 2 in einem ähnlichen Schema wie in Fig. 1 gezeigte QKD-Einrichtung 21 gemäß der Erfindung weist einen grundsätzlich ähnlichen Aufbau auf wie die bekannte QKD-Einrichtung 1 gemäß Fig. 1, weshalb einander entsprechende Komponenten mit denselben Bezugszeichen versehen sind.

So enthält die QKD-Einrichtung 21 gemäß Fig. 2 insbesondere eine Photonenquelle 2 mit einem Pumplaser 3 und einem nicht-linearen SPDC-Kristall 4, um so paarweise verschränkte Photonen, nämlich Signal-Photonen und Idler-Photonen, zu erzeugen. Während die Idler-Photonen in der lokalen Teilnehmerstation 6, die auch die Photonenquelle 2 enthält, mit Hilfe der Messeinheit 8 zu messen sind, werden die Signal-Photonen über einen Quantenkanal 5 mit einem Lichtleiter 5' einer fernen Teilnehmerstation 7 zur Messung in der Messeinheit 9 zugeführt, um einen Quantenschlüssel auf an sich bekannte und hier nicht näher zu erläuternde Weise zu erzeugen.

Jede Teilnehmerstation 6, 7 weist in ihrer Messeinheit 8 bzw. 9 wiederum ein optisches Modul 10 auf, wobei beide optische Module 10 im Prinzip ähnlich aufgebaut sind, so dass eine einmalige Erläuterung ausreicht. Ähnlich wie in Fig. 1 ist auch bei der QKD-Einrichtung 21 gemäß Fig. 2 in jedem optischen Modul 10 ein nicht-polarisierender Strahlteiler 16 vorgesehen, um die einzelnen Photonen entweder - über ein λ/2-Plättchen 19 - einem ersten polarisierenden Strahlteiler 17 oder aber - direkt - einem weiteren polarisierenden Strahlteiler 18 zuzuführen. Dadurch werden durch die beiden Strahlteiler 17, 18 nachfolgende Photonenkanäle 12, 13, 14, 15 erhalten, und zwar ähnlich wie in Fig. 1 jeweils einer hinter dem Durchlasspfad und einer hinter dem Reflexionspfad eines Strahlteilers. Durch das λ/2-Plättchen 19 wird wiederum eine 45°-Drehung der Polarisationsebene eingeführt.

Anders als bei der Einrichtung gemäß Fig. 1, bei der jede Detektoreinrichtung 11 mehrere Einzelphotonendetektoren aufweist, ist jedoch gemäß Fig. 2 jeweils nur ein einziger Einzelphotonendetektor, z.B. eine SPD-Photodiode 22 bzw. 23, als Detektoreinrichtung 11 vorgesehen, um die einzelnen Photonen zu detektieren und dabei dem jeweiligen Photonenkanal 12, 13, 14 oder 15 zuzuordnen, d.h. seine Polarisation zu messen. Um diese Zuordnung und damit die Messung der Photonen zu ermöglichen, sind die Photonenkanäle 12, 13, 14, 15 jeweils mit einer Verzögerungseinheit 24, 25, 26, 27, z.B. in Form von Verzögerungsleitungen mit verschiedenen, fest vorgegebenen Verzögerungszeiten enthalten. Demgemäß wird in einer Art Zeitmultiplex-Technologie auf Grund des zeitlichen Auftretens eines Photons innerhalb eines vorgegebenen Zeitfensters auf den jeweiligen Photonenkanal 12, 13, 14, 15 und demgemäß auf die Polarisation des Photons geschlossen. Es kann auch im jeweiligen optischen Modul 10 eine Verzögerungseinheit bzw. -leitung, z.B. die Verzögerungseinheit 24 im "ersten" Photonenkanal 12, weggelassen werden, wobei dann nur die übrigen drei Photonenkanäle, z.B. 13, 14, 15, mit Verzögerungseinheiten (mit verschiedenen Verzögerungszeiten) versehen werden - wichtig ist hier nur die zeitliche Zuordnung des Auftretens eines jeweiligen Photons zu einem bestimmten Zeitschlitz.

Das allgemeine Zeitfenster, innerhalb von dem die vier so gegebenen Zeitschlitze, entsprechend den vier Photonenkanälen 12 bis 15, enthalten sind, wird dabei einerseits durch eine pulsweise Abgabe der Photonen durch die Photonenquelle 2 bzw. andererseits, auf Seiten der fernen Teilnehmerstation 7, durch eine Unterbrechereinheit 28 in Form eines Choppers oder Zerhackers festgelegt.

In der Photonenquelle 2 ist beispielsweise eine vergleichbare Unterbrechereinheit 29, z.B. ein mechanischer Zerhacker, untergebracht, und zwar beispielsweise zwischen dem Pumplaser 3 und dem Kristall 4, um so den Laserstrahl periodisch zu unterbrechen bzw. durchzulassen. Es wäre aber im Prinzip auch möglich, anstatt eines Dauerstrichlasers einen Pulslaser zu verwenden. Ein Problem dabei kann sich jedoch dadurch ergeben, dass herkömmliche gepulste Laser für die Abgabe von sehr kurzen Laserimpulsen, im Bereich beispielsweise von Picosekunden, eingerichtet sind, was für eine QKD-Einrichtung nachteilig sein kann. Insbesondere kann es zufolge der großen Frequenzspreizung zu einer Polarisationsdispersion im Quantenkanal sowie wegen der hohen Leistung der Laserimpulse zu einer verstärkten Erzeugung von Mehrfachpaaren kommen. Nichtsdestoweniger könnten auch geeignete Pulslaser, die weniger energiereiche Impulse mit einer längeren Pulsdauer abgeben, verwendet werden.

Als einfache, besonders vorteilhafte Lösung wird jedenfalls zumindest derzeit die in Fig. 2 dargestellte Lösung mit den beiden Unterbrechereinheiten 28, 29 in Form von Zerhackern angesehen, wobei durch diese optomechanischen Komponenten der Laserstrahl in der Photonenquelle 2 physikalisch für vorgegebene Zeiten blockiert wird. Derartige Zerhacker sind an sich bekannt und bestehen beispielsweise aus einer drehbaren Scheibe oder zwei entgegengesetzt verdrehbaren Scheiben mit darin geätzten Schlitzen. Diese Zerhacker sind äußerst kostengünstig, und im Handel erhältliche Zerhacker verwenden als Blockiermittel eine metallische Platte mit einer Dicke von <1 mm, die durch herkömmliche Photoätztechniken zur Herstellung von Durchlassschlitzen für die Laserstrahlen behandelt ist. Mit diesen bekannten Zerhackern können Wiederholungsraten von (höchstens) 100 kHz erzielt werden.

Wenn besonders hohe Wiederholungsraten erwünscht sind, können auch anstatt der mechanischen Zerhacker integrierte elektrooptische Amplitudenmodulatoren als optoelektronische Zerhacker verwendet werden, wobei solche Komponenten ebenfalls im Handel erhältlich sind. Dabei sind Wiederholungsraten bis zu 1 GHz und mehr möglich, und im Hinblick auf das Fehlen von beweglichen Teilen ist auch eine besonders hohe Lebensdauer und hohe Zuverlässigkeit gegeben. Allerdings können derartige optoelektronische Zerhacker gewisse Übertragungsverluste in das System einführen, jedoch sind diese Verluste im Bereich von nachrichtentechnischen Wellenlängen relativ gering.

Die Photonen, die durch jeweils einen der vier Photonenkanäle 12, 13, 14 oder 15 zur SPD-Photodiode 22 bzw. 23 zu übertragen sind, können direkt, beispielsweise mit einer entsprechenden Fokussierung, in einem lichtdichten Gehäuse der Photodiode 22 bzw. 23 zugeführt werden. Vorteilhafter ist jedoch eine Lichtleitergebundene Übertragung der Photonen zu den Photodioden 22, 23, wobei dann eine Kopplereinheit 30 bzw. 30' vorgesehen wird, um die vier Photonenkanäle 12 bis 15 zu einem einzelnen Kanal 31 zur Photodiode 22 bzw. 23 zu kombinieren.

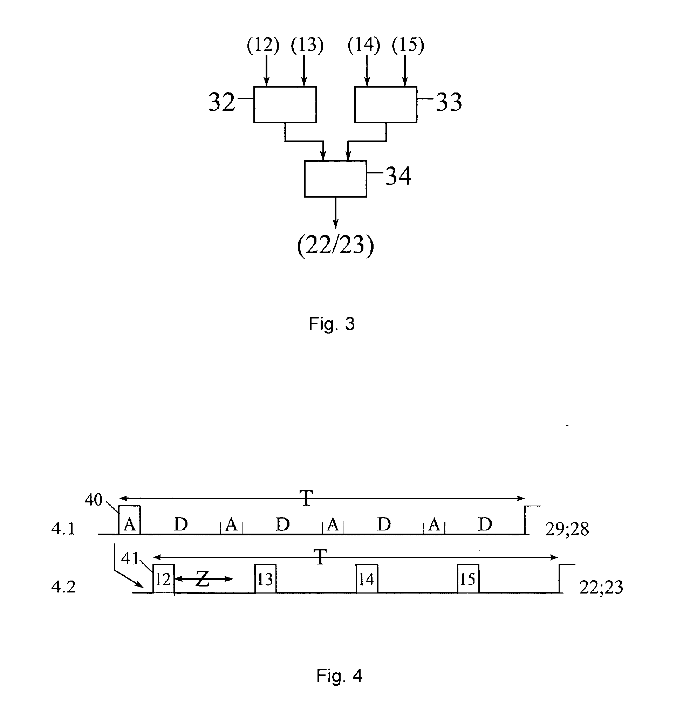

Anstatt einer derartigen 4/1-Kopplereinheit 30 bzw. 30', wie in Fig. 2 gezeigt, wäre es aber selbstverständlich auch möglich, drei 2/1-Koppler 32, 33 und 34 wie in Fig. 3 gezeigt, in Kaskade zu schalten, wobei derartige einfache Koppler besonders übliche Standardkomponenten bilden und besonders geringe Übertragungsverluste verursachen.

Derartige (Opto)Kopplereinheiten, hier allgemein mit 30 bzw. 30' bezeichnet, sind bei der vorliegenden Einrichtung 21 problemlos verwendbar, egal ob als 4/1-Koppler oder als 2/1-Koppler, da die übertragenen Signale (Photonen) alle dieselbe Frequenz sowie eine bekannte Polarisation aufweisen, wobei es weiters kein Nachteil ist, wenn durch den Koppler die Polarisation verdreht wird, da die Zuordnung zum jeweiligen Photonenkanal durch das zeitliche Auftreten des Photons - wie erwähnt und wie nachstehend noch näher anhand der Fig. 4 erläutert - erfolgt, so dass über diese zeitliche Zuordnung auch die jeweilige ursprüngliche Polarisation des Photons vor den Kopplereinheiten 30, 30' - auch wenn sie an der Stelle der Photodioden 22, 23 tatsächlich nicht mehr feststellbar ist - detektiert werden kann.

Beim fernen Teilnehmer 7 (BOB in Fig. 1), auch Empfänger genannt, werden die Signal-Photonen, die über den Quantenkanal 5 übertragen wurden, vorsorglich ebenfalls zeitlich gesteuert (s. Zerhacker 28) der Messeinheit 9 zugeführt. Der Zerhacker 28 kann ähnlich wie der Zerhacker 29 in der Photonenquelle 2 ausgeführt sein, und er wird in geeigneter Weise synchronisiert, wie nachstehend noch näher erläutert werden wird. Auf diese Weise ist es für einen Lauscher nicht möglich, die Ankunftszeit eines Signal-Photons in der fernen Teilnehmerstation 7 zu fälschen; dadurch kann eine sog. Zeitverschiebungsattacke, wie sie für Detektoren im Multiplex-Betrieb (s. Fig. 1) denkbar wäre, verhindert werden. Im Übrigen erfolgt die Photonenmessung bzw. -analyse analog zu jener auf der lokalen Teilnehmerseite 6, wobei ebenfalls Verzögerungsleitungen 24, 25, 26, 27 in den (zumindest drei) Photonenkanälen eingebaut sind und eine Kopplereinheit 30', insbesondere in Form einer 4/1-Kopplerkomponente oder in Form von in Kaskade geschaltenen drei 2/1-Kopplerkomponenten 32, 33, 34 (s. Fig. 3), vorgesehen ist. Auch hier ersetzt eine einzelne einfache Photodiode die vier üblichen InGaAs-Detektoren. Im Hinblick auf die durch die Zerhacker gegebenen Zeitfenster ist eine Triggerung der fernen Messeinheit 9, wie in Fig. 1 beschrieben, nicht mehr notwendig, und eine einfachere Synchronisation reicht hier aus.

Mehr im Einzelnen ist als Zeitsteuermittel 20 eine Synchronisationseinheit 35 vorgesehen, die in an sich völlig herkömmlicher Weise aufgebaut sein kann, um eine Synchronisation von Taktsignalen an den beiden Teilnehmerstationen 6, 7 herbeizuführen. Beispielsweise sind beide Teilnehmerstationen 6, 7 mit jeweils einem Taktsignal-Generator oder -Oszillator 36 bzw. 37 ausgerüstet, wobei diese lokalen Oszillatoren am Beginn eines QKD-Austauschs synchronisiert werden. Periodisch wird sodann im Betrieb ein Synchronisationsvorgang gestartet, um eine Drift zwischen den beiden Taktsignalen zu verhindern, die die Schlüsselerzeugungsrate dramatisch reduzieren könnte.

Im Prinzip ist eine Synchronisationseinheit (35 in Fig. 2) nicht unbedingt notwendig, weil es genügt, beim fernen Teilnehmer 7 den Oszillator 37 in seiner Frequenz dem lokalen Oszillator 36 in der ALICE-Station 6 nachzuführen oder anzupassen, indem die Phase des Oszillators 37 zur Maximierung der Gesamtzählrate bei der fernen Messeinheit 9 (BOB-Teilnehmer) nachgeregelt wird. Um eine besonders hohe Sicherheit zu erzielen, kann in der Synchronisationseinheit 35 ein PLL (Phase Locked Loop)-Schaltkreis, also eine phasenverriegelte Schleife, installiert werden, wobei eine klassische Leitung zwischen den beiden Teilnehmern 6 und 7 - wie sie an sich vorhanden ist - für diese Zwecke benutzt werden kann.

Eine phasenverriegelte Schleife ist ein hinlänglich bekanntes Stabilisationssystem, um Phase und Frequenz eines Oszillators so zu regeln, dass sie zu einem Bezugssignal passt. Wie bereits erwähnt bedeutet dies nicht, dass die Frequenzen ident sein müssen, vielmehr kann auch eine Unterschiedlichkeit in den Frequenzen im Sinne einer Frequenzmultiplikation oder Frequenzteilung gegeben sein. Die Frequenzabstimmung wird durch Vergleichen des Bezugsoszillators 36 (auf der ALICE-Seite 6) mit dem anderen Oszillator 37 (auf der BOB-Seite 7) über mehrere Schwingungen hinweg erreicht, wobei dadurch ein Auseinanderdriften der Taktsignale vermieden und auch verhindert wird, dass momentane Attacken bei spezifischen Quantensignalen durchgeführt werden, da das System nicht im Zeitmaß des lokalen Oszillators 37 der fernen Station 7 reagiert. Dadurch ist es auch nicht notwendig, die Synchronisationsprozedur zu authentisieren.

Die Zeitsteuerung für die vorliegende QKD-Einrichtung 21 soll noch mehr im Detail anhand der Fig. 4 erläutert werden. Dabei ist in Fig. 4 in Zeile 4.1 ein zeitlicher Zyklus T veranschaulicht, der durch zwei Zeitintervalle, nämlich die Dauer A eines aktiven Zeitschlitzes und die Dauer D einer Ruhezeit zwischen zwei solchen aktiven Detektions-Zeitschlitzen, definiert ist. Die Zykluszeit T ist demgemäß als allgemeines Zeitfenster definiert durch T = 4A + 4D. Während einer solchen Zykluszeit T, gemäß der ersten Zeitlinie 4.1 in Fig. 4, wird nur während eines anfänglichen Impulses 40 in der Photonenquelle die Erzeugung eines Photonenpaars ermöglicht, d.h. die pulsweise Erzeugung der Photonenpaare erfolgt jeweils während eines Zeitintervalls A, wonach während des restlichen Zeitraums der Zykluszeit T, also während 3A + 4D, keine Photonen erzeugt bzw. abgegeben werden.

Gemäß der zweiten Zeile 4.2 von Fig. 4, wo die zeitliche Steuerung der jeweiligen SPD-Photodiode 22, 23 veranschaulicht ist, ergibt sich in einer vergleichbaren Zykluszeit T ein jeweiliger Zeitschlitz 41 für die einzelnen Photonenkanäle 12, 13, 14, 15, wobei die Zeitschlitze 41 voneinander durch Ruhezeiten D getrennt sind. Mit Hilfe der Verzögerungseinheiten 24, 25, 26, 27, d.h. der verschiedenen, verschieden lange Verzögerungszeiten einführenden Verzögerungsleitungen, wird das jeweilige aktive Fenster 40 der Zeile 4.1 von Fig. 4 sozusagen zu den vier Zeitschlitzen 41 für die vier Photonenkanäle transformiert, wobei im jeweiligen Einzelfall einer dieser vier Zeitschlitze 41, je nach Polarisation des Photons, aktiv wird.

Die Dauer des Zeitintervalls 40, d.h. die Zeitdauer A, ist dabei derart zu wählen, dass im Mittel gesehen vom ALICE-Teilnehmer 6 pro Zyklus eher weniger als 1 Photon detektiert wird. Weiters kann die Zeitdauer D größer als die Totzeit Z der Detektor-Photodioden 22, 23 gewählt werden, um so eine einwandfreie Funktion dieser Photodioden 22, 23 im jeweiligen "Ernstfall", bei Empfang eines Photons, sicherzustellen. Im Fall D>Z sind die Messeinheiten 8 bzw. 9 in Fig. 2 ersichtlich vergleichbar den Messeinheiten 8 bzw. 9 in Fig. 1. Diese Zeiten sind jedoch an sich bekannt und können jedenfalls durch geeignete Wahl der Unterbrechereinheiten 29, 28 sowie auch durch entsprechende Wahl der Verzögerungszeiten der Verzögerungseinheiten bzw. -leitungen 24, 25, 26, 27 sichergestellt werden. Da die durchschnittliche Anzahl von Photonen in einem Zyklus auch von der Laserleistung abhängt, kann immer angenommen werden, dass A wesentlich kleiner als D ist, so dass die Zykluszeit T im Wesentlichen durch 4D bestimmt ist (T≈4D), so dass die Verzögerungszeiten durch die Verzögerungseinheiten bzw. -leitungen 24, 25, 26, 27 beispielsweise ungefähr mit Null, D, 2D und 3D gewählt werden können.

Die Ruhezeit D ist auch deshalb wichtig, da die Trennung zwischen zwei Detektionsfenstern oder Zeitschlitzen größer als der Jitter des jeweiligen Detektors sein muss, damit die Detektorzeit eindeutig dem jeweiligen Pfad (Photonenkanal) zugeordnet werden kann, um so die jeweilige Polarisation festlegen zu können. Für die meisten derzeit üblichen Silizium-Photodioden 22 ist die Ruhezeit ≈50 ns, und der Jitter beträgt <500 ps. Demgemäß kann beispielsweise für die einzelnen Parameter folgende Wahl getroffen werden:
A = 2,5 ns
D = 80 ns

Damit ergibt sich, dass T ≈300 ns gewählt werden kann, und dass die maximale Signalrate ≈3 MHz betragen kann.

Die Länge der Verzögerungsleitungen 24, 25, 26, 27 mit einem Standard-Brechungsindex von ≈1,5 würde dann ca. Null bzw. 15m bzw. 30m bzw. 45m betragen. Bei derartigen Längen würde die zusätzliche Abschwächung in den verschiedenen Photonenkanälen des optischen Moduls <0,3 dB sein.

In der fernen Teilnehmerstation 7 wird die Detektor-Photodiode 23 mit einer entsprechenden Zeitsteuerung gemäß der zweiten Linie 4.2 in Fig. 4 angesteuert, wobei wie erwähnt kein Triggermechanismus notwendig ist, sondern bloß eine periodische Synchronisation des lokalen Taktgenerators 37, um ein Driften zu verhindern. Auch im Fall eines InGaAs-Detektors 23 ist das vorstehend beschriebene Zeitschema anwendbar.

In Fig. 2 sind schließlich noch beispielsweise durch Rechner, wie PCs, Mikrocomputer oder dergl., verwirklichte Auswerteinheiten 42, 43 dargestellt, die die erforderlichen Messanalysen und dabei die zeitliche Zuordnung der durchgelassenen Photonen zu den Photonenkanälen 12, 13, 14, 15 durchführen, um entsprechende Schritte, wie die Generierung des Quantenschlüssels, auszulösen.

## Patentansprüche

1. QKD-Einrichtung (21) mit einer Photonenquelle (2), die zur Erzeugung von Paaren von verschränkten Photonen, nämlich Idler-Photonen und Signal-Photonen, eingerichtet ist, und mit zwei Messeinheiten (8, 9), von denen die eine jeweils die Idler-Photonen und die andere jeweils die Signal-Photonen der Photonenpaare zugeführt erhält, und von denen jede ein optisches Modul (10) mit mehreren Photonenkanälen (12, 13, 14, 15), wobei ein Photon abhängig von seiner Polarisation nur einen dieser Photonenkanäle passiert, und eine Detektoreinrichtung (11) zum Detektieren eines solchen Photons in Zuordnung zum jeweiligen Photonenkanal aufweist, sowie mit Zeitsteuermitteln (20) zur zeitlichen Abstimmung der Detektoreinrichtungen (11) der beiden Messeinheiten (8, 9) im Hinblick auf die korrelierte Detektion der Photonen eines jeden Paars, **dadurch gekennzeichnet, dass** die Photonenquelle (2) zur pulsweisen Abgabe der Photonenpaare eingerichtet und der anderen Messeinheit (9) eine Unterbrechereinheit (28) zur entsprechenden pulsweisen Zuführung der Signal-Photonen zum optischen Modul (10) vorgeordnet ist, und dass in jedem optischen Modul (10) die Photonenkanäle (12, 13, 14, 15), vorzugsweise bis auf einen (12), Photonen-Verzögerungseinheiten (24, 25, 26, 27) mit verschiedenen vorgegebenen Verzögerungszeiten aufweisen, wobei als Detektoreinrichtung (11) jeweils ein einziger Einzelphotonendetektor (22, 23) vorgesehen ist und das jeweilige durchgelassene Photon auf Basis eines Zeitraster dem jeweiligen Photonenkanal (12, 13, 14, 15) zugeordnet wird.

2. QKD-Einrichtung nach Anspruch 1, **dadurch gekennzeichnet, dass** die Photonenquelle (2) mit einem gepulsten Laser (3) ausgestattet ist.

3. QKD-Einrichtung nach Anspruch 1, **dadurch gekennzeichnet, dass** die Photonenquelle (2) mit einer optischen Unterbrechereinheit (29) im Strahlengang zwischen einem Pumplaser (3) und einem SPDC-Kristall (4) ausgestattet ist.

4. QKD-Einrichtung nach einem der Ansprüche 1 bis 3, **dadurch gekennzeichnet, dass** die bzw. gegebenenfalls zumindest eine Unterbrechereinheit (28, 29) durch einen mechanischen Zerhacker gebildet ist.

5. QKD-Einrichtung nach einem der Ansprüche 1 bis 3, **dadurch gekennzeichnet, dass** die bzw. gegebenenfalls zumindest eine Unterbrechereinheit (28, 29) durch einen elektrooptischen Modulator gebildet ist.

6. QKD-Einrichtung nach einem der Ansprüche 1 bis 5, **dadurch gekennzeichnet, dass** jeder Einzelphotonendetektor (22, 23) durch eine einzelne Photodiode gebildet ist.

7. QKD-Einrichtung nach einem der Ansprüche 1 bis 6, **dadurch gekennzeichnet, dass** jedes optische Modul (10) mit zwei polarisierenden Strahlteilern (17, 18) ausgestattet ist, die in den zwei Strahlengängen nach einem nicht-polarisierenden Strahlteiler (16), einmal unter Zwischenschaltung eines λ/2-Plättchens (19) als Polarisationsdreher und einmal direkt, angeordnet sind, und die mit ihren zwei mal zwei Ausgängen vier Photonenkanäle (12, 13, 14, 15) definieren.

8. QKD-Einrichtung nach einem der Ansprüche 1 bis 7, **dadurch gekennzeichnet, dass** die Photonen-Verzögerungseinheiten (24, 25, 26, 27) durch Verzögerungs-Lichtleitungen gebildet sind.

9. QKD-Einrichtung nach einem der Ansprüche 1 bis 8, **dadurch gekennzeichnet, dass** die Photonenkanäle (12, 13, 14, 15) jeweils über eine optische Kopplereinheit (30) mit dem Einzelphotonendetektor (22, 23) verbunden sind.

10. QKD-Einrichtung nach einem der Ansprüche 1 bis 9, **dadurch gekennzeichnet, dass** die Zeitsteuermittel (20) eine Synchronisationseinheit (35) aufweisen.

11. QKD-Einrichtung nach Anspruch 10, **dadurch gekennzeichnet, dass** der Einzelphotonendetektor (22, 23) sowie die Photonenquelle (2) bzw. die Unterbrechereinheit (28) an Taktsignaleinheiten (36, 37) angeschlossen sind, die ihrerseits mit der Synchronisationseinheit (35) verbunden sind.

12. QKD-Einrichtung nach Anspruch 10 oder 11, **dadurch gekennzeichnet, dass** die Synchronisationseinheit (35) mit einer phasenverriegelten Schleife ausgeführt ist.
